# EUROPEAN PATENT APPLICATION

(11) **EP 3 494 844 A1**
(43) Date of publication of application: **12.06.2019**
(21) Application number: 17205974.3
(22) Date of filing: 07.12.2017
(51) Int. Cl.: A47J 31/44, A47J 31/10

(54) **FILTER COFFEE MACHINE AND METHOD OF MAKING COFFEE**

(71) Applicant: Koninklijke Philips N.V., 5656 AE Eindhoven (NL)
(72) Inventor: ZWART, Bart-Jan, 5656 AE Eindhoven (NL)
(74) Representative: de Haan, Poul Erik

(57) **Abstract**

A filter coffee machine (10) has coffee grounds held in a coffee grounds container (16) that is lined with a filter, and heated water is provided from above. A water spreader (20) is provided which has an inlet (41) for receiving heated water and an outlet (44, 46, 60) for delivering water to the coffee grounds. The water spreader (20) is rotatable under the influence of the water flow between the inlet (41) and outlet (44, 46, 60), and the outlet is displaced from the axis of rotation (42). This gives a more uniform water delivery which improves the coffee flavor and/or enables a reduced amount of coffee to be used.

## Description

### FIELD OF THE INVENTION

This invention relates to a filter coffee machine, of the type which provides a flow of water through a bed of coffee grounds which is retained by a filter.

### BACKGROUND OF THE INVENTION

In coffee bars around the world, manual pour-over brewed coffee is increasing in popularity.

There are automated coffee makers which provide filtered coffee in the same way. In general, these operate by providing a water flow onto the coffee grounds from one central location or from a showerhead.

One of the claimed benefits of a manual pour-over process is the even water distribution of the hot water on top of the coffee grounds. The result is improved aroma extraction from the coffee grounds compared to letting water flow from one or more static locations.

It has been proposed to use an electric motor and electronics to provide an automated equivalent of the manual pour-over process, in which the distribution of water over the coffee grounds is improved. In particular, a water spout is created which moves over the coffee bed. The costs of such parts are significant and so this is not a desirable solution for a low cost domestic filter coffee maker.

There is therefore a need for a low cost solution for ensuring delivery of water across the area of an open exposed bed of coffee in an automated filter coffee machine.

### SUMMARY OF THE INVENTION

The invention is defined by the claims.

According to examples in accordance with an aspect of the invention, there is provided a filter coffee machine comprising:
a water vessel;
a water heater;
a coffee grounds container which is for receiving a filter and coffee grounds, wherein the water heater is adapted to deliver hot water to the coffee grounds container and wherein the coffee grounds container and the filter have a top opening having an area of at least 10cm²; and
a coffee receiving vessel beneath the coffee grounds container which is for receiving filtered coffee,
wherein the coffee machine further comprises a water spreader, wherein the water spreader comprises an inlet for receiving water from the water heater and an outlet for delivering water to the coffee grounds container, wherein the water spreader is rotatable under the influence of the water flow between the inlet and outlet and the outlet is displaced off-axis with respect to the axis of rotation.

This coffee machine provides automated filter coffee generation, in which water is delivered to coffee grounds held in a filter, e.g. a filter basket or a paper filter. In particular it relates to drip type (i.e. gravity based) filter coffee machines. To ensure the delivered water passes more uniformly through the entire volume of coffee grounds, a rotating water spreader is provided. Its rotation is driven by the flow of hot water through it, so that a motorized system is not needed. The more uniform water delivery improves the coffee flavor and/or enables a reduced amount of coffee grounds to be used. This water spreading function is needed in particular for large open-top coffee areas rather than for coffee pods (which generally make use of a pressurized flow), for example with an exposed area of coffee grounds of 10cm² or more. The coffee grounds are in loose form.

The off-axis outlet delivers a circular flow pattern over time. At any particular instant, the outlet delivers the water generally to a point location, and this point follows a circular path over time to create a circular flow pattern.

The water spreader makes use of the flow of water, in particular under gravity, to generate a rotational force, for example by creating a spiral water flow path. The water spreader prevents water from the water heater from flowing directly on top of the coffee bed.

The top opening for example has an area of at least 20cm². The machine may be for a single mug of coffee, or it maybe larger to prepare a jug of coffee. In the latter case, the area may be larger, such as 20cm² or more, such as 50cm² or more or even 100cm² or more.

The water heater is for example adapted to deliver a continuous flow of hot water between a start and end of a brewing cycle.

The continuous flow assists in providing a more uniform rotation of the water spreader and hence a more uniform delivery of water to the general exposed area of the coffee grounds, compared to a pulsed delivery of hot water.

The water spreader for example comprises a central inlet and an off-center outlet.

The central inlet enables a compact machine to be formed, wherein water is delivered downwardly under gravity along a central axis of the machine. The off-center outlet means that a larger annular area is covered by the water delivery system resulting from rotation of the water spreader.

The outlet for example comprises a curved outlet tube. A curved tube enables the gravitational force exerted on the water to impart a rotation-inducing force against side walls of the tube. The curved outlet tube for example follows a spiral shape when viewed from above. In side view, the tubes may have a constant downward gradient for imparting flow under gravity. However, the shape may also be curved in side view, following an arcuate path, for example with increasing gradient towards the end outlet.

The water flow is in constant contact with the curved tube until it exits the end outlet, and the contact time of the water and water spreader is fully used for generating rotation of the water spreader. The spreader can thus spin at a stable and high speed. By way of example, the speed of rotation may typically be in the range 0.2 revolutions per second to 2 revolutions per second in use.

The water spreader may comprise a set of two or more outlets spaced around the axis of rotation. In this way, water is delivered to a larger area of the coffee surface at any particular time.

The outlets preferably terminate at different radial distances from the axis of rotation. In this way, the path covered by each outlet is different as the water spreader rotates. This means that a larger area of the exposed coffee grounds is supplied with hot water in a balanced way. In particular, multiple circular water patterns are created in parallel.

The water spreader for example comprises a capture vessel, and the outlet or outlets extend from an edge of the capture vessel or from a base of the capture vessel.

This capture vessel ensures that the output from the water heater is substantially all delivered to the outlet or outlets. It also enables the output flow to be more uniform, which in turn may convert to a more uniform rotation of the water spreader and more uniform delivery of water to the coffee grounds area.

The water vessel may be located above the water heater. This provides a fully gravity fed system and also enables a compact overall structure.

The invention also provides a method of making coffee using a coffee machine which comprises: a water vessel; a water heater; and a coffee grounds container for receiving a filter and coffee grounds, wherein the coffee grounds container has a top opening that has an area of at least 10cm², wherein the method comprises:
using a water heater to deliver hot water to a water spreader, wherein the water spreader comprises an inlet for receiving water from the water heater and an outlet for delivering water to a coffee grounds container;
causing rotation of the water spreader under the influence of the water flow between the inlet and outlet, wherein the outlet is displaced off-axis with respect to the axis of rotation, to deliver a circular flow pattern over time; and
receiving the filtered coffee in a coffee receiving vessel beneath the coffee grounds container.

This method provides more uniform delivery of water to the coffee grounds, without requiring additional electrical or electronic devices.

The water spreader for example comprises a set of two or more outlets spaced around the axis of rotation, wherein the method comprises delivering a set of two or more circular flow patterns simultaneously, over time. Each circular flow pattern is formed over time, in the sense that at any particular instant the outlet delivers water to one general location, and as the water spreader rotates a circular path is transcribed. With multiple outlets at different off-axis positions, multiple such paths are formed in parallel.

The method may comprise delivering a continuous flow of hot water to the water spreader between a start and end of a brewing cycle.

Causing rotation may comprise providing the water flow along a spiral path, when viewed from above.

These and other aspects of the invention will be apparent from and elucidated with reference to the embodiment(s) described hereinafter.

### BRIEF DESCRIPTION OF THE DRAWINGS

Examples of the invention will now be described in detail with reference to the accompanying drawings, in which:
Figure 1 shows an example of the type of coffee machine to which the invention may be applied;
Figure 2 shows the coffee machine of Figure 1 as modified in accordance with the invention to make use of a water spreader;
Figure 3 shows the water spreader used in the design of Figure 2 more clearly;
Figure 4 shows the water spreader used in the design of Figure 2 in more detail;
Figure 5 shows a first design of water spreader;
Figure 6 shows a second design of water spreader; and
Figure 7 shows a method of making coffee.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a filter coffee machine in which coffee grounds are held in a filter basket and heated water is provided from above. A water spreader is provided which has an inlet for receiving heated water and an outlet for delivering water to the coffee grounds. The water spreader is rotatable under the influence of the water flow between the inlet and outlet, and the outlet is displaced from the axis of rotation. This gives a more uniform water delivery which improves the coffee flavor and/or enables a reduced amount of coffee to be used.

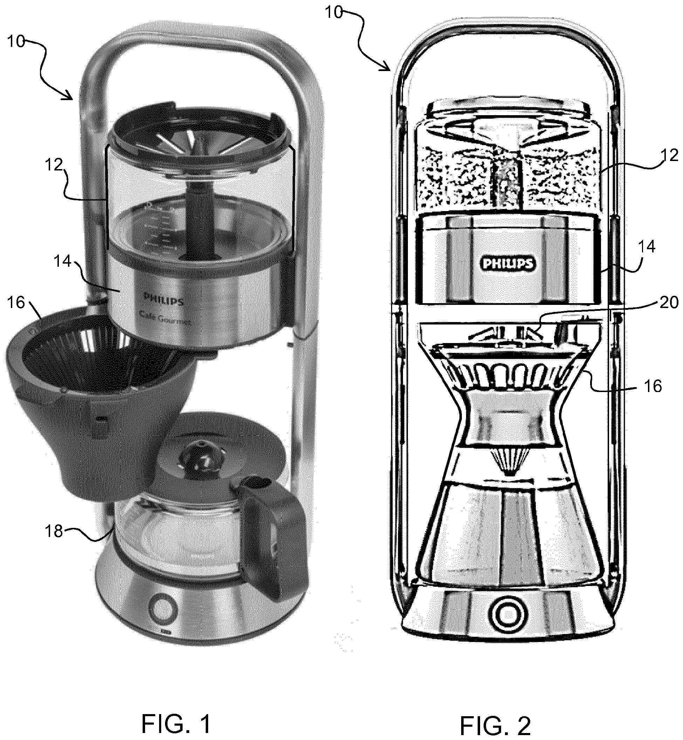

Figure 1 shows an example of the type of coffee machine to which the invention may be applied.

The filter coffee machine 10 comprises a stack of components, with a water vessel 12 at the top to provide gravity feeding of cold water to a water heater 14. The heated water is supplied by the water heater 14 to a coffee grounds container 16 which is for receiving a filter and coffee grounds.

The water heater 14 delivers hot water to the coffee grounds container 16 from above under gravity.

The brewed coffee is supplied to a jug 18 which sits at the base of the apparatus. The base of the apparatus for example includes a hot plate to jeep the jug warm.

The jug for example has a capacity of 1 liter, i.e. for making 8 cups of coffee.

For this purpose, the coffee machine is for example around 20cm wide and around 50cm high. The coffee grounds container for example has a top opening of 15cm diameter giving a top opening area of around 160cm². The same design concept may be applied with different sizes. However, the issue addressed by the invention arises in particular for large areas of exposed coffee grounds, in particular for a coffee grounds container having a top opening having an area of at least 10cm², for example at least 20cm², for example at least 30cm² and preferably even 50cm² or more. The area maybe more than 100cm² as for the example given above.

The water vessel 12 and the heater 14 may be considered to share the same water reservoir, and the heater heats the water in the reservoir before delivering it to the coffee grounds container. The heater may be formed in an aluminum base part of the reservoir.

A valve may be provided at the base of the water reservoir. In this example, the valve is controlled as a function of temperature. The valve has a valve rod which extends up a central column which is filled with water. An outlet opening at the base of the heater 14 is normally closed by a closing spring which pushes the valve rod up to close the outlet opening.

A memory metal spring (or bimetallic spring) is at the top of the valve rod and functions as a temperature sensor. It responds to steam generation at the top of the water reservoir and then opens the outlet opening. The outlet opening remains open, and a second sensor is used to switch off the heater when required.

When the valve is opened, there is a continuous flow of water from the water heater to the coffee grounds container below.

The operation of this valve system is described in further detail in WO 97/07721.

Furthermore, to the extent described above, the coffee machine is the commercially available "Gourmet" coffee machine of Philips (Trade Mark). This coffee machine provides automated filter coffee generation, with water delivered to coffee grounds held in a filter paper layer, using a drip type, pressure-less (gravity based) approach.

Figure 2 shows the coffee machine of Figure 1 as modified in accordance with the invention to make use of a water spreader 20.

The water spreader is positioned below the water heater 14 and above (or at the top part of) the coffee grounds container 16. The water spreader 20 comprises an inlet for receiving water from the water heater 14 and an outlet for delivering water to the coffee grounds container 16 (or the remainder of the coffee grounds container). The water spreader is rotatable under the influence of the water flow between the inlet and outlet and the outlet is displaced from the axis of rotation.

The rotating water spreader ensures that the delivered water passes more uniformly through the entire volume of coffee grounds. Its rotation is driven by the flow of hot water through it, so that a motorized system is not needed. The more uniform water delivery improves the coffee flavor and/or enables a reduced amount of coffee to be used.

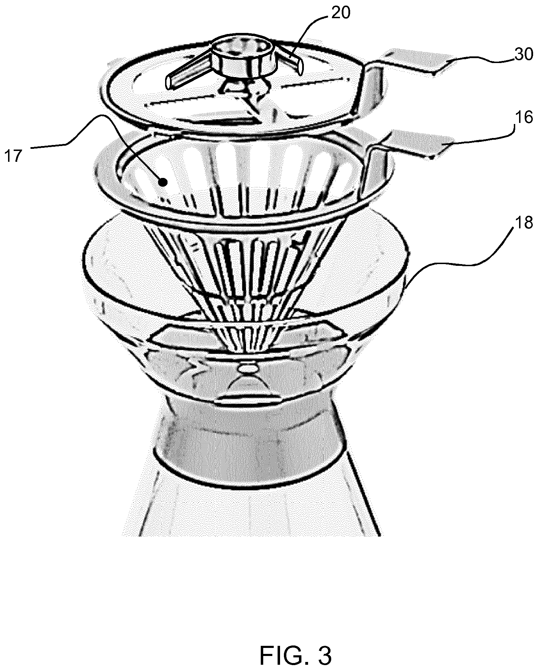

Figure 3 shows the water spreader 20 used in the design of Figure 2 more clearly. The water spreader 20 sits on a support 30 at the top of the coffee grounds container 16. The top opening 17 of the coffee grounds container can be seen more clearly. The support 30 enables rotation of the water spreader. For example, the support 30 may have an upstanding pin on which the water spreader is seated. The pin provides support for the water spreader to remain upright as well as allowing free rotation.

Any suitable rotational coupling is possible, including small bearings or even a contactless magnetic system.

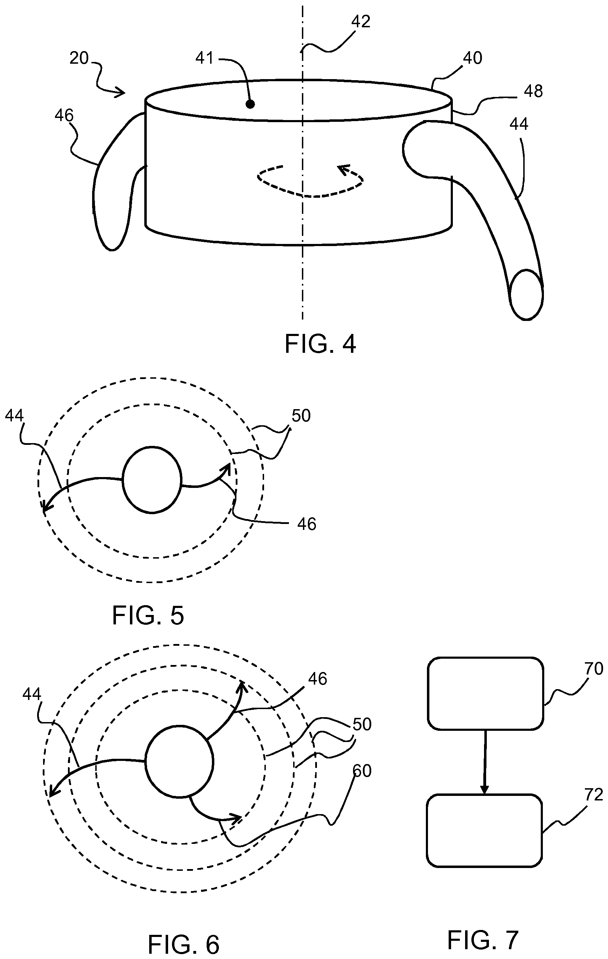

Figure 4 shows the water spreader used in the design of Figure 2 in more detail.

It comprises an open-top capture vessel 40 with a closed base, which can be filled by flow along a central axis 42 which is also the axis of rotation of the water spreader. The open top thus defines an inlet 41. There are one or more outlets extending from the vessel 40. In the example shown, two outlets 44, 46 are shown. They each extend from an edge 48 of the capture vessel in the example shown. However, they may instead extend from the base of the capture vessel.

This capture vessel 40 ensures that all of the flow from the heater is captured and delivered to the coffee grounds via the outlet or outlets. It also enables the output flow to be more uniform in that any variation in flow rate into the capture vessel 40 translates to a different retained water level, and so fluctuations in input flow translate to fluctuations in prevailing level in the capture vessel 40 rather than different output flow rates. This converts to a more uniform rotation of the water spreader 20 and more uniform delivery of water to the coffee grounds area.

This function may be of interest if the water heater delivers a significant flow variation over time. However, in a preferred design a substantially constant flow is provided from the water heater over time.

The outlets 44, 46 comprise tubes which terminate at off-center outlets.

The central inlet enables a compact machine to be formed, with water delivered downwardly under gravity along a central axis of the machine. The off-center outlet means that a larger annular area is covered by the water delivery system resulting from rotation of the water spreader.

The outlets shown in Figure 4 each comprise a curved outlet tube. The curvature is at least in part in the plan view of the device, i.e. the tubes do not simply extend radially outwardly when viewed from above. By curving around the axis 42 in a spiral type shape, the water flow along the tube acts against a side wall of the tube, and this imparts a rotational force to the water spreader. The tubes may also be curved downwardly, or else they lie on a uniformly downwardly sloping inclined path, in each case to promote flow along the tubes to the outlet at the remote end.

In this way, the water spreader 20 makes use of the flow of water under gravity to generate a rotational force.

The overall design of the water spreader is such that the center of mass is located along the rotation axis 42 so that the water spreader is balanced in a horizontal plane.

Figure 5 shows the water spreader of Figure 4 in plan view. It shows that the two outlets are spaced around the axis of rotation by 180 degrees, to make balancing possible. The two outlets terminate at different radial distances from the axis of rotation. In this way, the path 50 covered by each outlet is different as the water spreader rotates. This means that a larger area of the exposed coffee grounds is supplied with hot water. In particular, multiple circular water patterns 50 are created in parallel.

Figure 6 shows a water spreader with three outlets 44, 46, 60 in plan view. The three outlets are spaced around the axis of rotation by 120 degrees, again to make balancing possible. The three outlets terminate at different radial distances from the axis of rotation so that there are three different paths 50.

The multiple paths then cover a large area of the coffee grounds container opening. For example, if there are two paths, one could be positioned outside a circle which is midway between the axis of rotation and the outside of the coffee grounds container, and the other could be positioned inside that circle. Multiple paths may be distributed more or less evenly across the radius of the opening of the coffee grounds container.

The example shown makes use of gravity feeding of the hot water to the coffee grounds container from the heater. However, the invention may be applied to other configurations of drip filter coffee maker. For example, a tubular heater may be combined with a one-way valve which together function as a heater and pump. This may for example deliver a pulsed water flow rather than a continuous flow.

Figure 7 shows a method of making coffee using the coffee machine described above, namely which comprises: a water vessel; a water heater; and a coffee grounds container for receiving a filter, e.g. a paper filter or a filter basket, and coffee grounds retained by said filter, wherein the coffee grounds container and the filter have a top opening area of at least 10cm².

The method comprises:
in step 70, using a water heater to deliver hot water to a water spreader, wherein the water spreader comprises an inlet for receiving water from the water heater and an outlet for delivering water to a coffee grounds container from above;
in step 72, causing rotation of the water spreader under the influence of the water flow between the inlet and outlet, wherein the outlet is displaced from the axis of rotation to deliver an flow over time; and
in step 74, receiving the filtered coffee in a coffee jar beneath the coffee grounds container.

The coffee jar is preferably heated by a base plate.

This method provides more uniform delivery of water to the coffee grounds, without requiring additional electrical or electronic devices.

The method preferably comprises delivering a continuous flow of hot water to the water spreader between a start and end of a brewing cycle.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A filter coffee machine comprising:
a water vessel (12);
a water heater (14);
a coffee grounds container (16) which is for receiving a filter and coffee grounds, wherein the water heater is adapted to deliver hot water to the coffee grounds container, and wherein the coffee grounds container (16) has a top opening (17) having an area of at least 10cm²; and
a coffee receiving vessel (18) beneath the coffee grounds container which is for receiving filtered coffee,
wherein the coffee machine further comprises a water spreader (20), wherein the water spreader comprises an inlet (41) for receiving water from the water heater and an outlet (44, 46, 60) for delivering water to the coffee grounds container (16), wherein the water spreader is rotatable under the influence of the water flow between the inlet and outlet, and the outlet is displaced off-axis with respect to the axis of rotation (42).

2. A coffee machine as claimed in claim 1, wherein the top opening (17) has an area of at least 20cm², for example at least 30cm², for example at least 50cm², for example at least 100cm².

3. A coffee machine as claimed in claim 1 or 2, wherein the water heater (14) is adapted to deliver a continuous flow of hot water between a start and end of a brewing cycle.

4. A coffee machine as claimed in any preceding claim, wherein the water spreader (20) comprises a central inlet (41) and an off-center outlet (44, 46, 60).

5. A coffee machine as claimed in any preceding claim, wherein the outlet comprises a curved outlet tube (44, 46, 60).

6. A coffee machine as claimed in claim 5, wherein the curved outlet tube (44, 46, 60) follows a spiral shape when viewed from above.

7. A coffee machine as claimed in any preceding claim, wherein the water spreader (20) comprises a set of two or more outlets (44, 46, 60) spaced around the axis of rotation (42).

8. A coffee machine as claimed in claim 7, wherein the outlets (44, 46, 60) terminate at different radial distances from the axis of rotation (42).

9. A coffee machine as claimed in any preceding claim, wherein the water spreader comprises a capture vessel (40), and the outlet or outlets extend from an edge (48) of the capture vessel or from a base of the capture vessel.

10. A coffee machine as claimed in any preceding claim wherein the water vessel (12) is located above the water heater (14).

11. A method of making coffee using a coffee machine which comprises: a water vessel; a water heater; and a coffee grounds container for receiving coffee grounds retained by a filter, wherein the coffee grounds container has a top opening area of at least 10cm², wherein the method comprises:
(70) using a water heater to deliver hot water to a water spreader, wherein the water spreader comprises an inlet for receiving water from the water heater and an outlet for delivering water to a coffee grounds container;
(72) causing rotation of the water spreader under the influence of the water flow between the inlet and outlet, by having an outlet which is displaced off-axis with respect to the axis of rotation, to deliver a circular flow pattern over time; and
(74) receiving the filtered coffee in a coffee receiving vessel beneath the coffee grounds container.

12. A method as claimed in claim 11, wherein the water spreader comprises a set of two or more outlets spaced around the axis of rotation, wherein the method comprises delivering a set of two or more circular flow patterns simultaneously, over time.

13. A method as claimed in claim 11 or 12, comprising delivering a continuous flow of hot water to the water spreader between a start and end of a brewing cycle.

14. A method as claimed in any one of claims 11 to 13, wherein causing rotation comprises providing the water flow along a spiral path, when viewed from above.
